# EUROPEAN PATENT APPLICATION

(11) **EP 2 296 447 A2**
(43) Date of publication of application: **16.03.2011**
(21) Application number: 10174744.2
(22) Date of filing: 31.08.2010
(51) Int. Cl.: H05B 39/08

(54) **Dimming of lamps**

(30) Priority: 01.09.2009 GB 0915198
(71) Applicant: Novar Ed&s Limited, Bracknell, Berkshire RG12 1EB (GB)
(72) Inventor: Smale, David, Felixstowe, Suffolk IP11 9JZ (GB)
(74) Representative: Ford, James

(57) **Abstract**

A dimmer assembly is provided for controlling the amount of power supplied from an AC power source (1) to a load comprising a DCFL (3). The assembly (2) includes a dimmer circuit for reducing the power supplied from the AC power source (1) to the DCFL (3), a dimmer setting device operable by a user to vary the degree of dimming according to a setting by a user, the setting being variable by the user, and a control circuit arranged to apply substantially all the AC power to the DCFL (3) when the AC power source (1) is first switched on for connection of power to the DCFL (3), regardless of the setting of the dimmer setting device.

## Description

### Technical Field

The present invention relates to the field of dimming of lamps. More particularly, this invention relates to the field of dimmer assemblies for controlling the voltage supplied to a lamp and to a method of dimming a lamp. The invention is particularly concerned with the case in which the lamp is a dimmable compact fluorescent lamp (DCFL).

### Background of the Invention

Older designs of dimmer assemblies for lamps used variable resistors to control the voltage delivered across a load. A disadvantage of that approach is that energy not delivered to the load is instead converted into heat in the variable resistor, which results in the assemblies being inefficient and potentially dangerous.

More modern dimmer assemblies work by reducing the rms voltage across the load (the lamp) by switching current to the lighting load on and off many times per second. A mains AC circuit provides a voltage that varies sinusoidally from a peak positive voltage through zero voltage to a peak negative voltage. Modern dimmer assemblies often work by using a semiconductor switch to chop up each period of the sine wave of the AC signal into a portion in which the load is on and a portion in which it is off.

The desired switching behaviour can be achieved for example by providing a user adjusted variable resistor and a trigger circuit, which in combination control the semiconductor switch. For example, in some prior-art dimmer assemblies, the semiconductor switch is a triac, and the gate of the triac is connected to the trigger circuit, but it is also known to use a field effect transistor (FET), for example a metal-oxide-semiconductor FET (MOSFET).

In a known dimmer assembly, a user operable dimmer setting member and a switch member, which may be a separate member from the dimmer setting member or the same member, are provided. The user is able to adjust the dimming level by altering the position of the dimmer setting member, which may for example be rotatable or slidable, and is able to switch the lamp on and off by actuation of the switch member, without affecting the setting of the dimmer even when the dimmer control member and the switch member are the same member; for example, the switch member may be operated by pushing in the member and the dimming level set by rotating or sliding the same member.

In the last few years lamps known as compact fluorescent lamps (CFLs) have been offered for sale in place of incandescent lamps connected in mains voltage circuits. Such lamps have a physical size similar to an incandescent lamp and the same fittings as an incandescent lamp but operate in the manner of a fluorescent lamp and therefore are more efficient than incandescent lamps and typically also have a longer life. That has made CFLs popular as replacements for incandescent lamps. A user can simply insert a CFL in a socket suitable for receiving an incandescent lamp. Rather than having a wire wound ballast separate from the lamp, CFLs have integral electronic ballasts which require their own design of dimmer assemblies to match their particular characteristics. An ordinary CFL is not able to work with a typical dimmer assembly but there are CFLs designed specifically to work with dimmer assemblies and such a lamp is referred to herein as a dimmable compact fluorescent lamp (DCFL). A DCFL as herein defined has an electronic ballast which is incorporated in the lamp; usually the DCFL has a sinuous fluorescent tube that extends upwardly from a base in which the electronic ballast is disposed.

If a DCFL is inserted in a circuit incorporating a dimmer assembly, it becomes possible to dim the DCFL. The use of a DCFL with a conventional dimmer assembly can, however, significantly shorten the life of the DCFL. A particular problem arises when the DCFL is switched on with the dimmer assembly set to a dimmed level because the cathode in the DCFL takes longer to heat up and that can cause the cathode to burn out prematurely. Another problem arises when the DCFL is dimmed to an rms voltage level at which an incandescent lamp would still operate but the level is too low for the DCFL to generate light although it will still consume electricity. In such a case the DCFL may appear to a user to be switched off but it is actually still consuming significant power.

### Summary of the Invention

The present invention seeks to mitigate or remove at least one of the above-mentioned disadvantages that are particular to dimmer assemblies for operation with DCFLs.

According to the invention, there is provided a dimmer assembly for controlling the amount of power supplied from an AC power source to a load comprising a DCFL, the assembly including a dimmer circuit for reducing the power supplied from the AC power source to the DCFL, a dimmer setting device operable by a user to vary the degree of dimming according to a setting by a user, the setting being variable by the user, and a control circuit arranged to apply substantially all the AC power to the DCFL when the AC power source is first switched on for connection of power to the DCFL, regardless of the setting of the dimmer setting device.

When, in use, a dimmer assembly according to the invention is connected in a circuit with an AC power source and a DCFL, the DCFL will always be turned on at substantially full power, thus promoting a long life for the DCFL. It should be understood that, where reference is made to the load comprising a DCFL, the load may comprise more than one DCFL; for example, the load may comprise two, three or four DCFLs connected in parallel with one another. Furthermore it will be understood that, as is usual with dimmers, there may be an initial period during switching on when the dimmer assembly is synchronizing its operation to the mains supply before any power is supplied to the DCFL, but in accordance with the invention, when that power is supplied, it is at first supplied at substantially full power regardless of the setting of the dimmer setting device.

Whilst it is within the scope of the invention for the dimmer assembly to remain with substantially full power connected to the DCFL until some other signal is input (for example until a user alters the dimmer setting), it is much more advantageous if the control circuit is arranged to apply substantially all the AC power to the DCFL for a given time interval, before adjusting the AC power supplied to the DCFL according to the setting of the dimmer setting device. The given time interval is preferably in the range of from 0.5 to 5 seconds and more preferably in the range of from 1 to 3 seconds. In a preferred embodiment of the invention described below, the time interval is less than two seconds. Preferably the time interval is long enough for the cathode of a DCFL to heat up close to its usual operating temperature, but not significantly longer than that so that the desired level of dimming is obtained without undue delay.

Usually it will be both more convenient and more preferable for the control circuit to supply all the AC power to the CFL, apart from the small amount of power consumed inevitably by the circuitry in the dimmer assembly, but the benefit of the invention can be obtained even if a setting a little lower than a full power setting is employed when the power is first switched on.

Preferably the assembly is arranged to cease supplying substantial AC power to the DCFL when the rms output voltage for the DCFL would fall below a pre-determined threshold level. The pre-determined threshold level of rms voltage is preferably in the range of 70 to 110 V; that level is an unusually high level for a lowest rms voltage for a dimmer. In a preferred embodiment of the invention described below, the threshold level is about 90 V. An incandescent lamp continues to operate at low voltage levels but a typical DCFL does not produce any light, even though it consumes electrical power, when the rms voltage falls below a level in the range indicated above. By preventing flow of power when the rms voltage is below such a threshold level, the risk of a user wasting energy by having a DCFL consuming power but not providing any illumination is reduced. Preferably the lowest setting of the dimmer assembly (maximum dimming) is arranged to correspond to the predetermined threshold level and all other settings of the dimmer assembly are arranged to supply a rms output voltage for a DCFL that is higher than the predetermined threshold level.

Preferably the control circuit is arranged to cease supplying substantial AC power to the DCFL when the power supplied to the DCFL falls below a pre-determined threshold level of power. Preferably the threshold level of power is in the range of 5 to 14 W. Conventional dimmer switch assemblies will usually cease supplying AC power at a higher level of consumption than 14 W but a dimmer assembly particularly intended for DCFLs advantageously operates at lower power levels since even the full power rating of a DCFL may often be only 20 W.

It will be understood that the present invention may be applied to a wide variety of dimmer assemblies. In the particular example of the invention described below with reference to the drawings, the dimmer assembly is a two-wire device.

Whilst it is not an essential feature of the invention, the dimmer assembly preferably includes a controllably conductive switching device for connection in series between the AC power supply and the DCFL. Preferably the controllably conductive switching device is a semiconductor device having a control electrode, and the dimmer assembly includes a drive circuit for rendering the switching device conductive for a part of each half cycle, the control circuit being arranged to control for what part of each half cycle the switching device is rendered conductive.

The dimmer assembly may take any of a wide variety of forms. It is, for example, possible for the dimmer setting device to be set by a wireless signal from a remote control device. In the embodiment of the invention described below with reference to the drawings, the dimmer setting device includes a manually operable member on a front plate of the dimmer assembly.

Whilst it is possible for the dimmer assembly not to incorporate a switch for operation by a user and for that switch to be provided on a separate assembly remote from the dimmer assembly, it is preferred that the dimmer assembly includes a switch for connecting and disconnecting the AC power source, the control circuit being arranged to apply substantially all the AC power to the DCFL when the AC power source is first connected to the DCFL, regardless of the setting of the dimmer setting device. Preferably the manually operable member is also operable to actuate the switch for connecting and disconnecting the AC power source. Preferably, the manually operable member is rotatable to adjust the degree of dimming and can be pressed inwardly along its axis of rotation to actuate the switch.

According to the invention there is also provided a lighting circuit including an AC mains supply, a DCFL and a dimmer assembly as defined above.

According to the invention there is further provided a method of dimming in which a dimmer assembly as defined above is employed to control the supply of AC power to a DCFL, the DCFL being switched on at full power when a switch is first actuated by a user to connect AC power to the lamp regardless of the setting of the dimmer setting device.

### Description of the Drawings

By way of example, an embodiment of the invention will now be described with reference to the accompanying drawings, of which:
Fig. 1 shows a lighting circuit including a dimmer switch assembly, and
Fig. 2 is a circuit diagram of the dimmer switch assembly shown in Fig. 1.

### Detailed Description

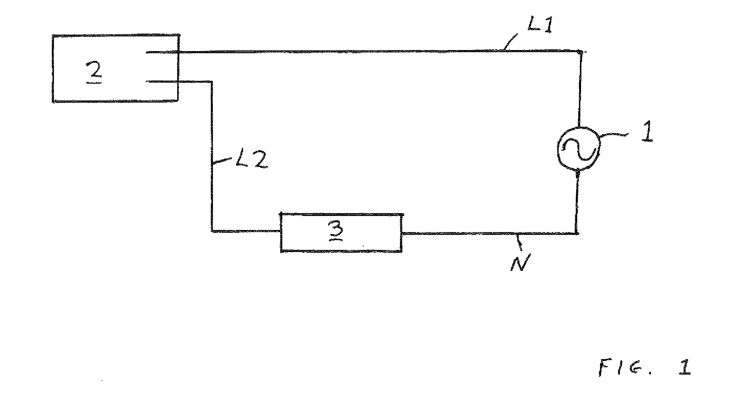

Referring first to Fig. 1, there is shown a lighting circuit comprising an AC power supply 1, a dimmer switch assembly 2 and a lamp 3. The circuit is of a well known kind that is employed in both domestic and non-domestic environments. Typically the AC power supply 1 is a mains power supply, the dimmer switch assembly is connected to the live terminal of the AC power supply via a live wire L1, the dimmer switch assembly 2 is connected to the lamp 3 via a live wire L2 and the lamp 3 is connected to the neutral terminal of the AC power supply via a neutral wire N. In Fig. 1 a single lamp 3 is shown but it will be understood that two or more lamps connected in parallel with one another may replace the single lamp 3.

The lamp 3 is a DCFL of a kind known *per se.* Such lamps typically have a sinuous fluorescent tube that extends upwardly from a generally cylindrical base which may have a bayonet fitting or a screw fitting to enable it to be inserted into and held in a socket which is also able to receive an incandescent lamp. Within the base of the DCFL, an electronic ballast circuit is provided to enable the lamp to operate from a conventional mains power supply.

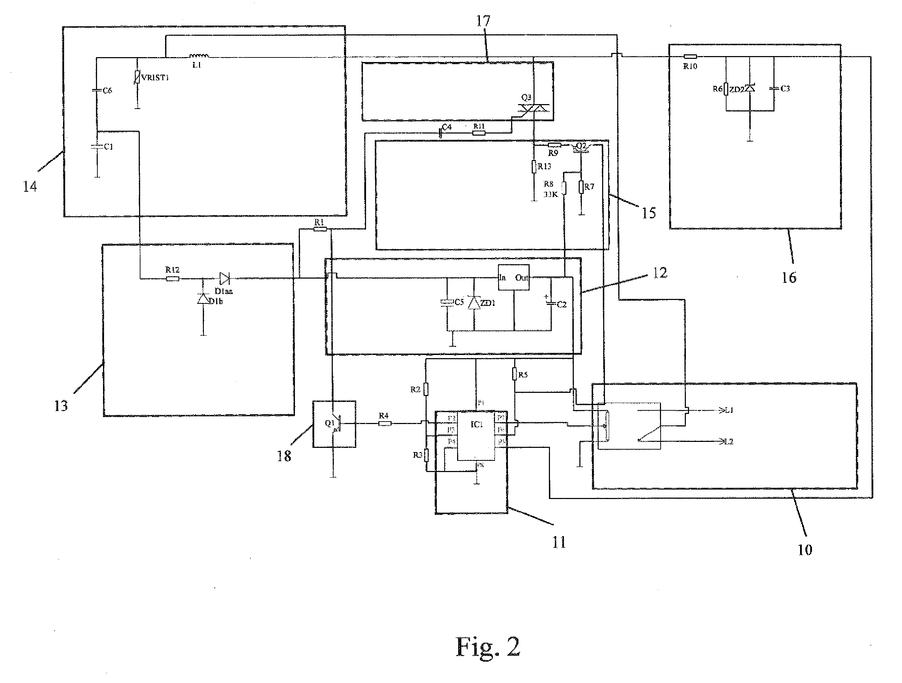

The dimmer switch assembly 2 is of a kind that is generally known *per se*, but which has certain particular features that are incorporated in accordance with the invention. The circuit layout of the dimmer switch assembly 2 is of a known form but for completeness will now be briefly described with reference to Fig. 2.

As shown in Fig. 1, live wires L1 and L2 are connected to the dimmer switch assembly, which operates as a two-wire dimmer control circuit. In Fig. 2 groups of circuit elements that in combination act as a particular device are outlined by partially dotted lines. Those elements comprise:
a combined switch and potentiometer device 10 operated by a user;
a micro-controller 11 in the form of an integrated circuit that controls the functioning of the dimmer switch assembly;
a power supply circuit 12 that includes a regulator and is able to supply a stable DC power supply to the micro-controller 11;
a rectifier 13 to provide a DC supply for the regulator;
a capacitative voltage dropper 14 to generate a low voltage supply for the rectifier 13 and to provide a filter that reduces the electromagnetic interference (EMI) created by the circuit;
an overload and fault detector 15 to protect the circuit from overload and fault conditions;
a zero crossing conduit 16 which incorporates a filter and sets the level of a zero crossing signal passed to the micro-controller 11;
a triac 17 which controls the dimming of the lamp 3; and
a trigger circuit 18 for firing the triac 17.

In Fig. 2 the individual circuit elements are referenced by letters and numerals. As is conventional the following prefix letters indicate the following components: R - resistor; C - capacitor; L - inductor; D - diode; ZD - zener diode; Q - semiconductor switching device; VRIST - variable resistor; IC - integrated circuit; REG - regulator. In one particular example of the invention the circuit elements are those identified in the table below.

| REF | VALUE | DESCRIPTION | MANUFACTURER/PART NO. |
|---|---|---|---|
| VRIST1 | SO5K275E2 | EPCOS VARISTOR 275v | EPCOS B 72205-S2271-K101 |
| R1 | 2K2 0. 1W 5% | 0805 RESISTOR | ROHM MCR10EZHJ222 |
| R2 | 75K 0. 1W 5% | 0805 RESISTOR | ROHM MCR10E2HJ753 |
| R3 | 47K 0. 1W 5% | 0805 RESISTOR | ROHM MLR10EZHJ473 |
| R4 | 15K 0. 1W 5% | 0805 RESISTOR | ROHM MCR10EZHJ153 |
| R5 | 22K 0. 1W 5% | 0805 RESISTOR | ROHM MCR10EZHJ223 |
| R6 | 56K 0. 1W 5% | 0805 RESISTOR | ROHM MCR10EZHJ563 |
| R6 | 10K 0. 1W 5% | 0805 RESISTOR | ROHM MCR10EZHJ103 |
| R9 | 470R 0. 1W 5% | 0805 RESISTOR | ROHM MCR10EZHJ471 |
| R10 | 2M2R 0. 25N 5% | 1206 RESISTOR | ROHM KTREZPJ225 |
| R11 | 220R 0. 125W 5% | 1206 RESISTOR | ROHM MCR18EZHEJ221 |
| R12 | 220R 0. 25W 5% | CERAMIC LEADED RESISTOR | MULTICOMP MCF220R |
| R13 | **0. 0R5 1W 1%** | SENSE RESISTOR | WELWYN OAR10R05F I |
| SAR1 | 10K | 21mm PUSH/PUSH POT | TOP UP 17P1P10SVB-D-21FP-B10K-MT-6H |
| C1 | 330N 100V | METALISED POLYESTER 5mm PITCH CAP | EPCOS B32529-C1334 |
| C2 | 4u7 16V | SURFACE MOUNT A/B/B2 TAN CAP | EPCOS B45196P2475K10 |
| C3 | 22nF 25V | X7R 0805 CAPACITOR | PHI COMP 08052R223K8B20D |
| C4 | 470nF 16V | X7R 1206 CAPACITOR | PHI COMP 1206R474K7BBOD |
| C5 | 47uF 16V | 2mm Pitch 11x 5mm RADIAL ELECTROLYTIC CAP | VISHAY 2222 116 36479(BC COMPONENTS) |
| C6 | 150nF X2+/-20% | X2 CAPACITOR | ARCOTRONICS R46-I 3150-M2M |
| TC1 | 50045312 | SURFACE MOUNT PIC | PIC12F675 -1/SN |
| Q1, Q2 | 500Ma 50V | BC817 NPN TRANSISTOR SOT23 PACKAGE | PHILIPS BC817-25 |
| Q3 | 10mA 16A 600V | BTA16-600SW DRIVE TRIAC T0220 | ST BTA16-600SW |
| REG1 | XC62FP4002MR 4V | VOLTAGE REGULATOR SOT23 PACKAGE | TOREX XC62FP4002MR |
| D1 | BAV99 SOT23 | DUAL DIODE SOT23 PACKAGE | ROHM BAV99 |
| ZD1 | BZVS5-C10 500mW | 500Mw ZENER SOD-80C PACKAGE | PHILIPS BZV55-C10 |
| ZD2 | BZX84-C4V7 | ZENER DIODE SOT23 PACKAGE | PHILIPS BZX84C4V7 |
| L1 | 1m2H 300W | TORROIDXL INDUCTOR | 47807PL |

The micro-controller 11 comprises an integrated circuit with eight pins which are referenced P1 to P8 in Fig. 2. Pin P1 receives the DC voltage supply from the power supply circuit 12. Pin P2 outputs the firing pulses for the trigger circuit 18 that fires the triac 17. Pin P3 sets the load limits for the dimmer based on the voltage set by R2 and R3. Pin P4 is not used and is grounded. Pin P5 receives the input from the zero crossing circuit 16. Pin P6 receives the input from the overload and fault detector 15. Pin P7 receives the input from the potentiometer of the combined switch and potentiometer device 10. Pin P8 is a ground connection for the micro-controller 11.

The general operation of the lighting circuit is as follows: a user is able to switch the lamp 3 on and off by operating the switch 10A of the combined switch and potentiometer device 10 and is also able to adjust the setting of the potentiometer 10B of the combined device 10 to a required setting. In the particular example of the invention described, a single knob is provided for these operations: pushing the knob in operates the switch 10A and rotating the knob adjusts the setting of the potentiometer 10B. The setting of the potentiometer 10B is input to the micro-controller 11 via its pin P7 and after processing within the micro-controller an appropriate output, dependent on the input at pin P7, is fed from the pin P2 to the trigger circuit 18 which controls the firing of the triac 17.

The dimmer switch assembly as described in the general terms above is of a kind known *per se.* For example, the description above could be applied to the dimmer switch assembly K1521 WHILV which is sold by Honeywell under the registered trade mark MK and incorporates the same micro-controller 11.

The dimmer switch assembly embodying the invention is specifically adapted in certain respects as will be described below. The micro-controller 11 is arranged such that when the user closes the switch 10A of the combined switch and potentiometer device 10, there is a short initialisation procedure which may last about 1 to 1.5 seconds and then the micro-controlier 11 provides an output on pin P2 to the trigger circuit 18 to fire the triac 17 to apply full power to the lamp 3, regardless of the setting of the potentiometer 10B of the combined switch and potentiometer device 10. After the full power output has been provided for a pre-determined time interval, which in this particular example of the invention is about 1.5 seconds, the micro-controller 11 adjusts its output on pin P2 according to the setting of the potentiometer 10B and the dimmer switch assembly then operates conventionally. In the particular example described the initial operation of the circuit at full power regardless of the dimmer setting is achieved by appropriate programming of the software in the micro-controller 11 but it will be understood that it could also be achieved by appropriate hardware if preferred.

The micro-controller 11 and the potentiometer 10B are arranged such that at the lowest setting of the potentiometer 10B (maximum dimming) the output on pin 2 to the trigger circuit reduces the rms voltage to about 90 V As a user adjusts the potentiometer away from its lowest setting the rms voltage increases from that base level of 90 V rms. Also the circuit is arranged such that when the power that would be passed through a lamp (or a plurality of parallel connected lamps) reduces to less than 11 W, the micro-controller also ceases to send any firing pulses to the trigger circuit 18 and the triac 17 is not fired.

Whilst the present invention has been described and illustrated with reference to a particular embodiment, it will be appreciated by those of ordinary skill in the art that the invention lends itself to many different variations not specifically illustrated herein. Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims.

## Claims

1. A dimmer assembly for controlling the amount of power supplied from an AC power source to a load comprising a DCFL, the assembly including a dimmer circuit for reducing the power supplied from the AC power source to the DCFL, a dimmer setting device operable by a user to vary the degree of dimming according to a setting by a user, the setting being variable by the user, and a control circuit arranged to apply substantially all the AC power to the DCFL when the AC power source is first switched on for connection of power to the DCFL, regardless of the setting of the dimmer setting device.

2. A dimmer assembly according to claim 1, in which the control circuit is arranged to apply substantially all the AC power to the DCFL for a given time interval, before adjusting the AC power supplied to the DCFL according to the setting of the dimmer setting device.

3. A dimmer assembly according to claim 2, in which the given time interval is in the range of from 0.5 to 5 seconds.

4. A dimmer assembly according to claim 3, in which the given time interval is in the range of from 1 to 3 seconds.

5. A dimmer assembly according to any preceding claim, in which the assembly is arranged to cease supplying substantial AC power to the DCFL when the rms output voltage for the DCFL would fall below a predetermined threshold level.

6. A dimmer assembly according to claim 5, in which the lowest setting of the dimmer assembly (maximum dimming) is arranged to correspond to the predetermined threshold level and all other settings of the dimmer assembly are arranged to supply a rms output voltage for a DCFL that is higher than the predetermined threshold level.

7. A dimmer assembly according to claim 5 or 6, in which the predetermined threshold level of rms voltage is in the range of 70 to 110 V.

8. A dimmer assembly according to any preceding claim, in which the control circuit is arranged to cease supplying substantial AC power to the DCFL when the power supplied to the DCFL falls below a predetermined threshold level of power.

9. A dimmer assembly according to claim 8, in which the threshold level of power is in the range of 5 to 14 W.

10. A dimmer assembly according to any preceding claim, in which the dimmer assembly includes a controllably conductive switching device for connection in series between the AC power supply and the DCFL.

11. A dimmer assembly according to claim 9, in which the controllably conductive switching device is a semiconductor device having a control electrode, and the dimmer assembly includes a drive circuit for rendering the switching device conductive for a part of each half cycle, the control circuit being arranged to control for what part of each half cycle the switching device is rendered conductive.

12. A dimmer assembly according to any preceding claim, the assembly including a switch for connecting and disconnecting the AC power source, the control circuit being arranged to apply substantially all the AC power to the DCFL when the AC power source is first connected to the DCFL, regardless of the setting of the dimmer setting device.

13. A dimmer assembly according to claim 12, in which the dimmer setting device is a manually operable member on a front plate of the dimmer assembly and the manually operable member is also operable to actuate the switch for connecting and disconnecting the AC power source.

14. A lighting circuit including an AC mains supply, a DCFL and a dimmer assembly according to any preceding claim.

15. A method of dimming, in which a dimmer assembly according to any of claims 1 to 13 is employed to control the supply of AC power to a DCFL, the DCFL being switched on at full power when a switch is first actuated by a user to connect AC power to the DCFL regardless of the setting of the dimmer setting device.
